# EUROPEAN PATENT APPLICATION

(11) **EP 1 921 732 A1**
(43) Date of publication of application: **14.05.2008**
(21) Application number: 06023533.0
(22) Date of filing: 13.11.2006
(51) Int. Cl.: H02K 5/10

(54) **Housing for a drive unit, and method for manufacturing such housing**

(71) Applicant: ArvinMeritor Light Vehicle Systems-France, 45600 Sully sur Loire (FR)
(72) Inventor: Le Hir, Michel, 14110 Conde sur Noireau (FR); Raoul, Philippe, 14700 Fresne la Mere (FR); Omelezuk, Stephane, 14220 Meslay (FR)
(74) Representative: Sties, Jochen

(57) **Abstract**

The invention relates to a housing (14) for a drive unit, with a vent opening (20) which allows changes of the amount of air contained in the interior of the housing (14), and with a membrane (22) associated with the vent opening (20) and preventing moisture and dirt from entering the housing (14), wherein the housing (14) is injection molded and molded to the membrane (22). The invention also relates to a method for manufacturing such housing.

## Description

The invention relates to a housing for a drive unit, with a vent opening which allows changes of the amount of air contained in the interior of the housing, and with a membrane associated with the vent opening and preventing moisture and dirt from entering the housing.

Most housings for drive units are sealed in order to prevent moisture and dirt from entering the housing, which would result in increased wear, corrosion and possibly breakdown of the drive. A reliable seal is in particular necessary for housings of drive units which drive window regulators of vehicles or other components of vehicles as these drive units are used in a harsh environment in which they are subjected to dirt and moisture.

A consequence from sealing the housing is that temperature changes result in changes of the internal pressure due to the thermal expansion of the air or gas present in the housing. However, any difference between the pressure in the interior and the exterior of the housing places a load on the seals of the housing, resulting in possible wear and the risk of unwanted media entering the housing at seals which seal a movable part, e.g. a drive axis. In particular, this risk is existent if the temperature in the interior of the housing decreases after an increase. An increase of the temperature and consequently of the pressure results in air or gas being pressed out ot the housing. The subsequent decrease of the pressure results of air or gas being sucked into the housing, there being the risk of moisture and dirt being transported with the air or gas into the housing.

It is known in the prior art to use a gas permeable membrane which is arranged so as to cover a vent opening in the housing. The membrane allows the housing to "breathe" while moisture and dirt are prevented from entering the housing. In the prior art design, the membrane is either held in a ring which is attached to the housing, or is glued to the housing. Both designs have disadvantages as regards mounting costs.

The object of the invention is to provide a housing which can "breathe" but which can be manufactured with low costs.

To this end, the invention provides a housing for a drive unit, with a vent opening which allows changes of the amount of air contained in the interior of the housing, and with a membrane associated with the vent opening and preventing moisture and dirt from entering the housing, wherein the housing is injection molded and molded to the membrane. This solution is based on the idea of fixedly attaching the membrane to the housing at the same time the housing is molded, thereby avoiding any separate mounting steps. It has namely been found that the membrane can be reliably connected to the housing simply by injection molding the housing "onto" the membrane so that the material of the housing bonds to the material of the membrane without there being a need to use an adhesive or other attachment means.

Preferably, the vent opening comprises a shoulder which seats the membrane. The shoulder assists in bonding the membrane in a mechanically stable manner.

According to a preferred embodiment, the vent opening is formed as a channel, the membrane being arranged at the end of the channel which faces the interior of the housing. The channel serves as a protection for the membrane as it ensures that other components cannot accidentally contact and possibly damage the membrane, e.g. during transportation or mounting of the housing.

In order to provide optimum protection of the interior of the housing, the membrane is formed from a hydrophobic and gas permeable material.

The housing can accommodate an electric motor and/or a gear drive. It is also possible to attach the motor to the housing, e.g. by providing a flange for attaching the electric motor. In particular, the housing is part of a drive which is used in a vehicle, such as a power window drive, a trunk lid drive, a sun roof drive, etc.

The object of the invention is also achieved with a method for manufacturing a housing for a drive unit, having the following steps: First, a mold is provided which has a mold cavity for forming a housing with a vent opening which allows changes of the amount of air contained in the interior of the housing. Then, a membrane is inserted in to the mold. Thereafter, the mold is closed, and fluid plastics material is injected into the mold cavity, the plastics material bonding to the membrane. Finally, the mold is opened. Regarding the advantages achieved with this method, reference is made to the above explanations.

The invention will now be described with reference to an embodiment which is shown in the enclosed drawings. In the drawings,
- Figure 1 shows a schematic cross section through a drive unit having a housing according to the invention;
- Figure 2 shows a section through a portion of a housing according to the invention;
- Figure 3 shows portion III of Figure 2 at a larger scale; and
- Figure 4 schematically shows a part of a mold used for manufacturing a housing according to the invention.

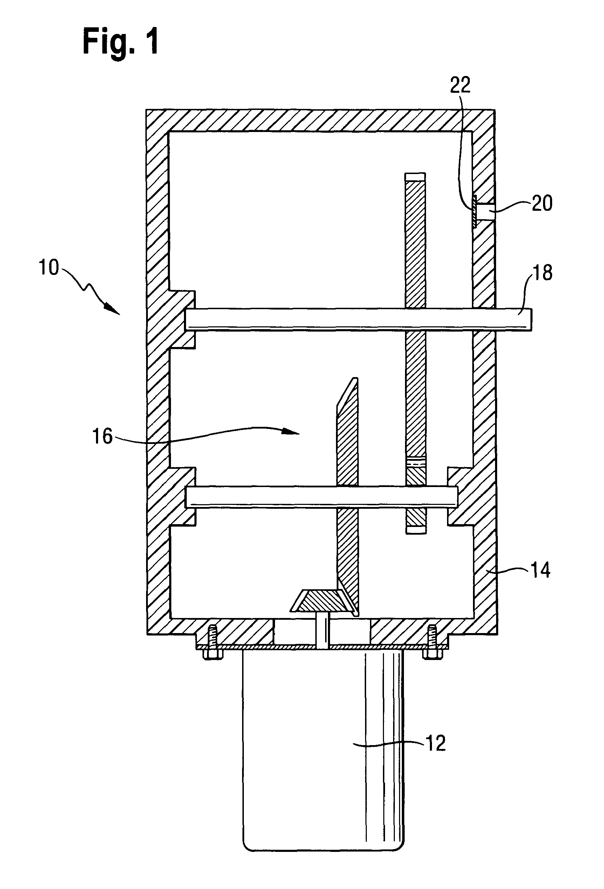

Figure 1 schematically shows a drive unit 10 having an electric motor 12, a housing 14 with a gear drive 16 and an output shaft 18. Housing 12 has a vent opening 20 which is formed as a channel communicating the interior of the housing with the exterior. A membrane 22 is associated to vent opening 20 in a gas tight manner so as to cover its entire cross section. Membrane 22 is formed from a gas permeable and hydrophobic material. Any gas or air being exchanged between the interior and the exterior of the housing must, due to the membrane being attached at its circumference in a gas tight manner to the housing, traverse membrane 22.

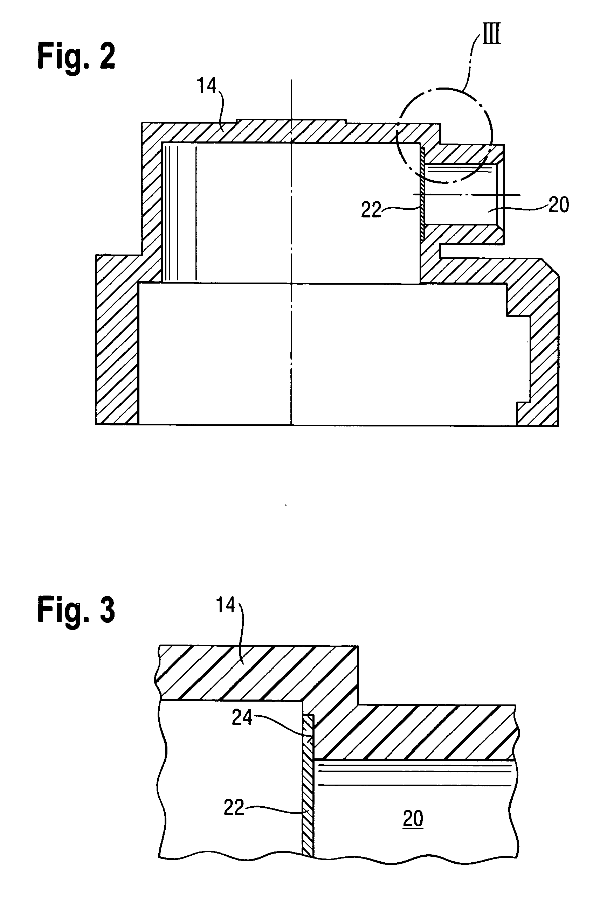

As can be seen in Figures 2 and 3, vent opening 20 has a shoulder 24 at its end in the interior of the housing. The outer circumference of membrane 22 abuts shoulder 24. As the housing was injection molded onto membrane 22, the membrane fixedly connected with its outer circumference to shoulder 24 without the need to use additional attachment means. The connection between membrane 22 and housing 14 is strong enough to withstand any loads acting on the membrane and resulting from a pressure difference which can build up between the interior and the exterior of the housing due to the flow resistance offered by the membrane to gas flowing therethrough.

In an alternative embodiment which is not shown in the drawings, the membrane is not placed at the end of the vent opening channel but in an intermediate position. It could also be arranged at the outer end of the chanel of the vent opening.

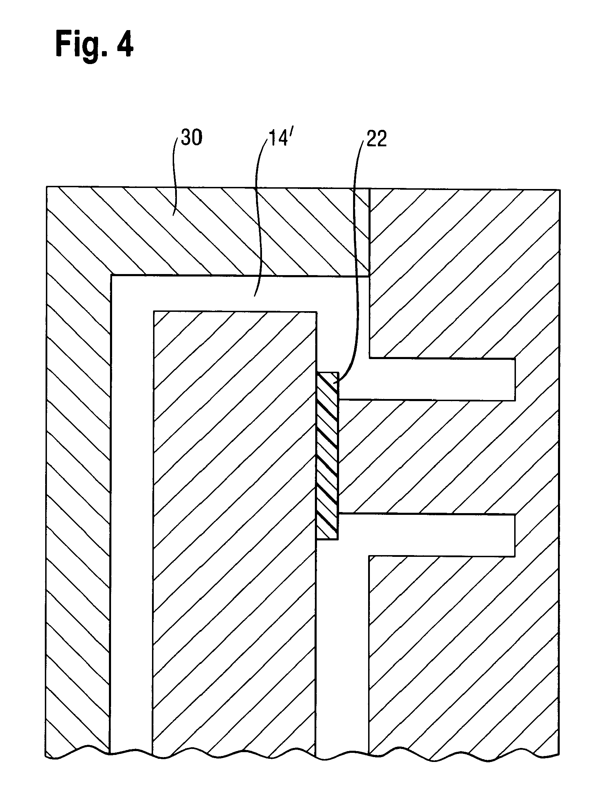

The housing with the integrally attached membrane is manufactured in the following manner: First, the membrane is inserted into a mould 30 which is schematically shown in Figure 4. Then, fluid plastics material is injected into mold cavity 14'. Due to its temperature and adhesive properties, the fluid plastics material bonds to the membrane, resulting in a gas-tight and solid connection between the hardened plastics material and the membrane. As soon as the plastics material has sufficiently solidified, mold 30 can be opened, and housing 14 with the membrane 22 mounted at the vent opening can be removed from the mold.

### List of reference numerals

- 10:: drive unit
- 12:: electric motor
- 14:: housing
- 14':: mold cavity
- 16:: gear drive
- 18:: output shaft
- 20:: vent opening
- 22:: membrane
- 24:: shoulder
- 30:: mold

## Claims

1. A housing (14) for a drive unit, with a vent opening (20) which allows changes of the amount of air contained in the interior of the housing (14), and with a membrane (22) associated with the vent opening (20) and preventing moisture and dirt from entering the housing (14), wherein the housing (14) is injection molded and molded to the membrane (22).

2. The housing of claim 1 wherein the vent opening (20) comprises a shoulder (24) which seats the membrane (22).

3. The housing of claim 1 or claim 2 wherein the vent opening (20) is formed as a channel, the membrane (22) being arranged at the end of the channel which faces the interior of the housing (24).

4. The housing of claim 1 or claim 2 wherein the vent opening (20) is formed as a channel, the membrane (22) being arranged at an intermediate position in the channel.

5. The housing of any of the preceding claims wherein the membrane (22) is formed from a hydrophobic and gas permeable material.

6. The housing of any of the preceding claims wherein an electric motor is arranged in its interior.

7. The housing of any of claims 1 to 5, having a flange (13) for attaching an electric motor (12).

8. The housing of any of the preceding claims wherein a gear drive (16) is arranged in its interior.

9. Method for manufacturing a housing (14) for a drive unit with the following steps:
- a mold (30) is provided which has a mold cavity (14') for forming a housing (14) with a vent opening (20) which allows changes of the amount of air contained in the interior of the housing (14);
- a membrane (22) is inserted into the mold (30);
- the mold (30) is closed;
- fluid plastics material is injected into the mold cavity (14'), the plastics material bonding to the membrane (22);
- the mold (30) is opened when the plastics material has solidified sufficiently.
